# EUROPEAN PATENT SPECIFICATION

(11) **EP 3 355 618 B1**
(45) Date of publication and mention of the grant of the patent: **26.02.2020**
(21) Application number: 15906959.0
(22) Date of filing: 29.10.2015
(51) Int. Cl.: H04W 36/00, H04L 29/12, H04W 88/16, H04W 36/12

(54) **METHOD AND DEVICE FOR DETERMINING BEARER BY MOBILE EDGE COMPUTING**
VERFAHREN UND VORRICHTUNG TRÄGER ZUR BESTIMMUNG EINES TRÄGERS DURCH MOBILE-EDGE-COMPUTING
PROCÉDÉ ET DISPOSITIF DE DÉTERMINATION DE PORTEUSE PAR INFORMATIQUE EN PÉRIPHÉRIE MOBILE

(43) Date of publication of application: 01.08.2018
(73) Proprietor: Huawei Technologies Co., Ltd., Longgang District Shenzhen, Guangdong 518129 (CN)
(72) Inventor: ZHU, Qianghua, Shenzhen, Guangdong 518129 (CN); XIONG, Chunshan, Shenzhen, Guangdong 518129 (CN); SHI, Xiaoyan, Shenzhen, Guangdong 518129 (CN)
(74) Representative: Pfenning, Meinig & Partner mbB
(86) International application number: PCT/CN2015/093215
(87) International publication number: WO 2017/070895

(56) References cited:
- WO-A1-2015/018489
- CN-A- 101 193 449
- CN-A- 103 430 516
- US-A1- 2011 255 471
- FABIO GIUST: NEC EUROPE LTD: "MEC MOBILITY MANAGEMENT;MEC(15)000165_MEC_mobility_mana gement", ETSI DRAFT; MEC(15)000165_MEC_MOBILITY_MANAGEMENT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - MEC, 14 July 2015 (2015-07-14), pages 1-10, XP014250180, [retrieved on 2015-07-14]
- SAGUNA ET AL: "Use Case: MEC Virtualized IP Flow Mobility Function;MEC(15)000117a1r2_Use_Case__MEC__ _Virtualized_IP_Flow_Mobility_Function", ETSI DRAFT; MEC(15)000117A1R2_USE_CASE__MEC___VIRTUALI ZED_IP_FLOW_MOBILITY_FUNCTION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - MEC, 30 June 2015 (2015-06-30), pages 1-2, XP014250137, [retrieved on 2015-06-30]

## Description

### TECHNICAL FIELD

The present invention relates to the field of data communication technologies, and in particular, to a method and an apparatus for determining a bearer for a mobile edge computing.

### BACKGROUND

With continuous development of science and technology, data communication based on an evolved packet system is widely applied, and at the same time, a MEC (Mobile Edge Computing, mobile edge computing) system is also widely applied. MEC technologies can create highly distributed environments for deployment of applications and services, to process data on a user plane. The highly distributed environments are mainly located on a RAN (Radio Access Network, radio access network) side. A lower-layer node of the MEC is an access network device, and an upper-layer node of the MEC is a serving gateway. Therefore, the MEC is close to UE (user equipment, user equipment), the access network device, and the serving gateway, and has predominant position advantages to easily obtain network information related to the UE, thereby providing the UE with local services having small delays, fast access, and high bandwidths.

In the prior art, as UE continuously moves, the UE is handed over from a first access network device to a second access network device. After the handover, a new bearer is set up for the UE between the second access network device and a serving gateway. Because a MEC is located between the second access network device and the serving gateway, and the MEC stores only information about an old bearer after the handover of the UE, data cannot be correctly transmitted to the UE, affecting normal communication of the UE.

Guist, Fabio: NEC Europe Ltd: MEC MOBILITY MANAGEMENT; ETSI Draft; MEC(15)000165_MEC_Mobility_Management; European Telecommunications Standard Institute (ETSI); 650, Route de Lucioles;F-06921 Sophia-Antipolis; France; identifies types of mobility and relevant aspects of mobility management design.

### SUMMARY

Embodiments of the present invention provide a method and an apparatus according to the appended independent claims for determining a bearer for a mobile edge computing, so that a MEC can determine a bearer for UE after a handover of the UE, and the MEC can normally communicate with the UE.

According to a first aspect, an embodiment provides a method for determining a bearer for a mobile edge computing. The method is applied to a handover procedure of user equipment UE from a source access network device (such as a source base station or a source base station controller) to a target access network device (such as a target base station or a target base station controller). Data of the UE is handed over from a bearer between the source access network device and a source serving gateway (such as a source SGW or a source SGSN) to a bearer between the target access network device and a target serving gateway (such as a target SGW or a target SGSN). A specific method includes: A MEC obtains a data packet that carries an end marker. For example, during a handover of the UE, the source serving gateway sends, to the source access network device, the data packet that carries the end marker. The end marker is used to indicate to the source access network device that the handover of the UE occurs, and the marker is transparently delivered by using the MEC. The MEC obtains the data packet that carries the end marker and that is sent by the source serving gateway, or the source serving gateway sends the data packet that carries the end marker to the MEC. The MEC obtains, according to the data packet that carries the end marker, a bearer identifier and an identifier of the UE in a handover procedure, and requests information about the second bearer from a node of a second bearer. The request carries the bearer identifier of the UE and the identifier of the UE. The node of the second bearer returns a response message and the information about the second bearer according to the request. The MEC receives the response message. The MEC stores the information about the second bearer according to the identifier of the UE and the bearer identifier of the UE, for example, replaces information about a first bearer with the information about the second bearer that corresponds to the identifier of the UE and the bearer identifier of the UE, or directly stores the information about the second bearer corresponding to the identifier of the UE and the bearer identifier of the UE.

By means of the foregoing method, after a handover of the UE to an access network device communicating with the UE occurs, the MEC can accurately determine the information about the second bearer of the UE in time, so that the UE can normally communicate with the MEC.

With reference to the first aspect, in a first implementation of the first aspect, the data packet that carries the end marker further carries a tunnel endpoint identifier TEID of the first bearer. Specifically, the obtaining, according to the data packet that carries the end marker, a bearer identifier and an identifier of the UE in a handover procedure may include: determining the identifier of the UE and the bearer identifier of the UE according to the TEID of the bearer that is carried in the data packet that carries the end marker, for example, by receiving an IP address that is of the UE and that corresponds to the bearer in the data packet that carries the end marker; or determining a data packet that corresponds to the bearer of the received data packet that carries the end marker and that is stored in the MEC, and determining an IP address of the UE according to the data packet. The bearer identifier of the UE is the TEID of the first bearer. Specifically, for the requesting information about the second bearer from a node of a second bearer, the information about the second bearer is requested from a core network information service CNIS. By means of the method, the information about the second bearer can be requested from the CNIS by using the UE IP and the TEID of the first bearer.

With reference to the first aspect, in a second implementation of the first aspect, the obtaining, according to the data packet that carries the end marker, a bearer identifier and an identifier of the UE in a handover procedure may specifically include: determining an identifier of a node of the first bearer according to the data packet that carries the end marker. For example, the MEC prestores identifiers of various bearer nodes, determines, according to a TEID of a bearer that is carried in the data packet that carries the end marker, the identifier that is of the node of the first bearer and that corresponds to the bearer, or further determines, according to an IP address of the source access network device that is carried in the data packet that carries the end marker, the identifier that is of the node of the first bearer and that corresponds to the access network device, and requests the identifier of the UE and the bearer identifier of the UE from the node of the second bearer. The request carries a TEID of the first bearer. The node of the first bearer returns a response message according to the request, and the response message carries the identifier of the UE and the bearer identifier of the UE. The MEC receives the response message. By means of the method, the MEC can request related information of the UE from the node of the first bearer, and further determine the information about the second bearer.

With reference to the second implementation of the first aspect, in a third implementation of the first aspect, the node of the first bearer is the source access network device, and the node of the second bearer is the target access network device. The access network device stores a CRNIT or an S-TMSI of the UE. In addition, when the information about the second bearer is requested from the node of the second bearer by using the CRNIT of the UE, the request further includes an identifier of the source access network device. By means of the method, the CRNIT or S-TMSI and the bearer identifier of the UE can be requested from the source access network device, and further, the information about the second bearer can be requested from the target access network device.

With reference to the second implementation of the first aspect, in a fourth implementation of the first aspect, the node of the first bearer is the source serving gateway. When the handover is a handover between different systems, the source serving gateway is a source SGSN of the UE, and the node of the second bearer is a target MME or a target SGSN of the UE; or when the handover is a handover within a same system, the source serving gateway and the node of the second bearer are both an SGSN that serves the UE. In this case, the corresponding identifier of the UE is an IMSI, an IP and an APN, or an MSISDN.

With reference to the first aspect, in a fifth implementation of the first aspect, the obtaining, according to the data packet that carries the end marker, a bearer identifier and an identifier of the UE in a handover procedure may specifically include: determining, by the MEC, according to the data packet that carries the end marker, an identifier of the source serving gateway. For example, the MEC prestores identifiers of various serving gateways. It is determined, according to a TEID of a bearer that is carried in the data packet that carries the end marker, the identifier that is of the serving gateway and that corresponds to the bearer. Alternatively, the data packet that carries the end marker includes an IP address of the source serving gateway, related information of the UE is found according to the IP address, and the identifier of the source serving gateway is obtained. The MEC sends a request message that carries a TEID of the first bearer to the source serving gateway according to the identifier of the source serving gateway, to request an identifier of a node of the first bearer. The MEC receives a response message sent by the source serving gateway, where the response message carries the identifier of the node of the first bearer. The MEC sends, according to the identifier of the node of the first bearer, a request message that carries the TEID of the first bearer, to request the identifier of the UE and the bearer identifier of the UE. The MEC receives a response message sent by the node of the first bearer, where the response message carries the identifier of the UE and the bearer identifier of the UE. The identifier of the UE is an IMSI, an IP and an APN, or an MSISDN. By means of the method, the MEC can determine the first bearer by using the source serving gateway, and further determine the information about the second bearer.

With reference to the fifth implementation of the first aspect, in a sixth implementation of the first aspect, the source serving gateway is an SGW. When the handover is a handover between different systems, the node of the first bearer is a source MME of the UE, and the node of the second bearer is a target MME or a target SGSN of the UE; or when the handover is a handover within a same system, the node of the first bearer and the node of the second bearer are both an MME that serves the UE.

With reference to the sixth implementation of the first aspect, in a seventh implementation of the first aspect, the bearer identifier of the UE is an EPS bearer identifier, or an ERAB bearer identifier, or an S1 bearer identifier.

In some implementations of the first aspect, the source serving gateway and the target serving gateway are a same serving gateway.

According to a second aspect, an embodiment provides an apparatus for determining a bearer for a mobile edge computing. The apparatus is configured to implement the method in the first aspect method, and specifically includes: a first obtaining unit, a second obtaining unit, a sending unit, a receiving unit, and a storage unit. The first obtaining unit is configured to obtain a data packet that carries an end marker. The second obtaining unit is configured to obtain a bearer identifier of UE and an identifier of the UE according to the data packet that carries the end marker. The sending unit is configured to send a request message to a node of a second bearer, where the request message carries the bearer identifier of the UE and the identifier of the UE, and is used to request information about the second bearer. The receiving unit is configured to receive a response message sent by the node of the second bearer, where the response message carries the information about the second bearer. The storage unit is configured to store the information about the second bearer according to the identifier of the UE and the bearer identifier of the UE.

With reference to the second aspect, in a first implementation of the second aspect, the second obtaining unit includes: a first determining subunit, a first sending subunit, and a first receiving subunit. The first determining subunit is configured to determine an identifier of a node of a first bearer according to the data packet that carries the end marker. The first sending subunit is configured to send a request message that carries a TEID of the first bearer to the node of the first bearer according to the identifier of the node of the first bearer, where the request message is used to request the identifier of the UE and the bearer identifier of the UE. The first receiving subunit is configured to receive a response message sent by the node of the first bearer, where the response message carries the identifier of the UE and the bearer identifier of the UE.

With reference to the second aspect, in a second implementation of the second aspect, the second obtaining unit includes: a second determining subunit, a second sending subunit, a second receiving subunit, a third sending subunit, and a third receiving subunit. The second determining subunit is configured to determine an identifier of a source serving gateway according to the data packet that carries the end marker. The second sending subunit is configured to send a request message that carries the TEID of the first bearer to the source serving gateway according to the identifier of the source serving gateway, where the request message is used to request an identifier of a node of the first bearer of the UE. The second receiving unit is configured to receive a response message sent by the source serving gateway, where the response message carries the identifier of the node of the first bearer. The third sending subunit is configured to send, according to the identifier of the node of the first bearer, a request message that carries the TEID of the first bearer, where the request message is used to request the identifier of the UE and the bearer identifier of the UE. The third receiving subunit is configured to receive a response message sent by the node of the first bearer, where the response message carries the identifier of the UE and the bearer identifier of the UE.

According to a third aspect, an embodiment of the present invention provides an apparatus for determining a bearer for a mobile edge computing. The apparatus is configured to implement the method in the first aspect, and specifically includes: a processor, a memory, a communications interface, and a bus. The processor, the memory, and the communications interface communicate with one another by using the bus. The communications interface is configured to communicate with UE, a source access network device, a target access network device, a source serving gateway, a target serving gateway, a node of a first bearer, or a node of a second bearer. The memory is configured to store a program. When the device operates, the processor is configured to execute the program stored in the memory, to perform the method in the first aspect.

### BRIEF DESCRIPTION OF DRAWINGS

FIG. 1 is a schematic structural diagram of an EPS system;
FIG. 2 is a schematic diagram of a bearer of an EPS system;
FIG. 3 is a schematic structural diagram of an apparatus for determining a bearer for a mobile edge computing according to an embodiment of the present invention;
FIG. 4 is a flowchart of a method for determining a bearer for a mobile edge computing according to an embodiment of the present invention;
FIG. 5 is a schematic diagram of a handover of UE;
FIG. 6 is a flowchart of a method for determining a bearer for a mobile edge computing according to another embodiment of the present invention;
FIG. 7A and FIG. 7B are a flowchart of a method for determining a bearer for a mobile edge computing according to still another embodiment of the present invention;
FIG. 8A and FIG. 8B are a flowchart of a method for determining a bearer for a mobile edge computing according to still another embodiment of the present invention;
FIG. 9A and FIG. 9B are a flowchart of a method for determining a bearer for a mobile edge computing according to still another embodiment of the present invention; and
FIG. 10 is a schematic structural diagram of an apparatus for determining a bearer for a mobile edge computing according to another embodiment of the present invention.

### DESCRIPTION OF EMBODIMENTS

The technical solutions of the present invention are further described in detail with reference to the accompanying drawings and embodiments as follows:
To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It is found by the inventor of the present invention by means of analysis that, after a handover of UE occurs, a bearer node before the handover stores an identifier of a bearer node after the handover. Therefore, the bearer node after the handover may be determined by using the bearer node before the handover, and information about a bearer after the handover may be requested from the bearer node after the handover. By means of this method, a mobile edge computing can effectively determine the bearer that corresponds to the UE after the handover, thereby further implementing normal communication between a MEC and the UE.

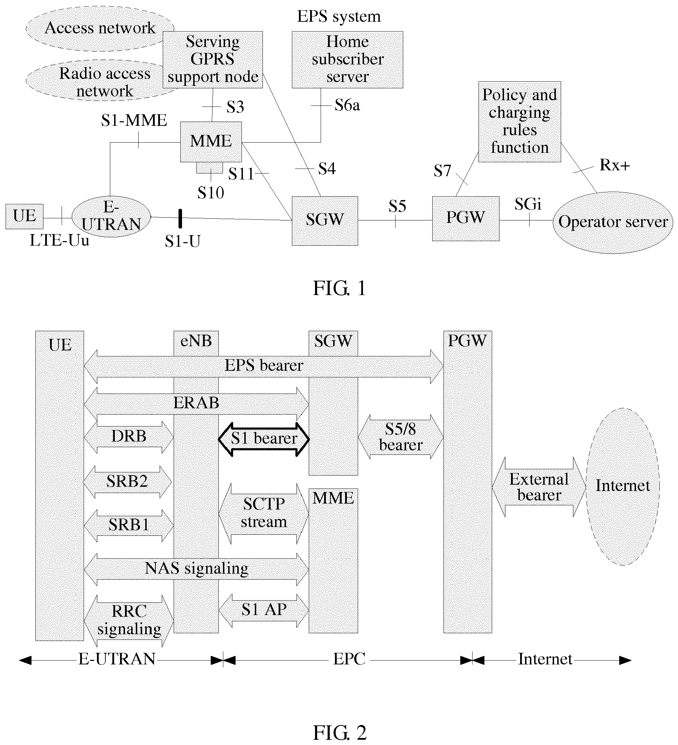

It should be noted that, the embodiments of the present invention are mainly based on systems such as an LTE (Long Term Evolution, Long Term Evolution) system, a UMTS (Universal Mobile Telecommunications System, Universal Mobile Telecommunications System), and the like, and are especially applicable to an EPS (Evolved Packet System, evolved packet system) system of the LTE. The EPS is a concept that is introduced by the 3GPP (3rd Generation Partnership Project, 3rd Generation Partnership Project) standard committee in the fourth generation mobile communication. FIG. 1 is a schematic structural diagram of an EPS system. As shown in FIG. 1, the EPS mainly includes UE (User Equipment, user equipment), an E-UTRAN (Evolved Universal Terrestrial Radio Access Network, evolved universal terrestrial radio access network), an EPC (Evolved Packet Core, evolved packet core), and the like.

The EPC mainly includes an MME (Mobility Management Entity, mobility management entity), a P-GW (Packet Data Network Gateway, packet data network gateway), an SGW, and the like, and can implement conventional capabilities of a mobile network such as storage of subscription data of a subscriber, mobility management, and data exchange and can provide ultrafast online experience for a user.

In addition, the E-UTRAN may be a network including multiple eNBs (Evolved NodeB, evolved NodeB), and achieve functions such as a wireless physical layer function, resource scheduling and radio resource management, radio access control, and mobility management. The eNB is connected to the SGW by using a user plane interface S1-U (on which the MEC is located), and transports user data by using a GTP-U (General Packet Radio System Tunneling Protocol User Plane, General Packet Radio System Tunneling Protocol-User Plane). The eNB is connected to the MME by using a control plane interface S1-MME, and achieves functions such as controlling of a radio access bearer.

The UMTS system mainly includes a UTRAN (Universal Terrestrial Radio Access Network, universal terrestrial radio access network) and a CN (Core Network, core network). The UTRAN is a network mainly including multiple base stations and a base station controller RNC (Radio Network Controller, radio network controller). The core network CN includes an SGSN (Serving GPRS Support Node, serving gateway), and the SGSN communicates with a base station by using a base station controller.

It should be further noted that, a bearer is configured to transport data of a particular service in a system between ends, and the bearer is selected for transmission of the service when satisfying a specific service requirement. For example, FIG. 2 is a schematic diagram of a bearer of an EPS system. As shown in FIG. 2, an EPS bearer is set up between UE and a PGW, and may be divided into two sections: an ERAB (E-UTRAN Radio Access Bearer, E-UTRAN radio access bearer) bearer and an S5/8 bearer. The ERAB bearer is set up between the UE and an SGW. The S5/8 bearer is set up between the SGW and the PGW. In addition, the ERAB bearer may be further divided into a DRB (Data Radio Bearer, data radio bearer) bearer between the UE and an eNB and an S1 bearer between the eNB and the SGW.

If there is data (which is usually downlink data) to be transmitted by using a bearer, a PGW or UE end performs matching on the data with data packet filters in a specific order. A relationship between a data packet filter and a bearer is bound when the bearer is set up or modified. Generally, one data packet filter corresponds to one tunnel identifier TEID (Tunnel Endpoint Identifier, tunnel endpoint identifier). Specifically, data matching may be performed according to a 5-tuple (a source IP, a destination IP, a source port, a destination port, a protocol) in the data. If the matching succeeds, the data packet is encapsulated into a bearer bound to this data packet filter, or if the matching fails, a next data packet filter is used for the matching.

It should be understood that, the embodiments of the present invention may be applied to the LTE or UMTS system, but are not limited thereto. The embodiments of the present invention may also be applied to another communications system that includes a bearer between a base station and an SGW and in which the MEC can join.

For ease of understanding the embodiments of the present invention, the following further describes specific embodiments of the present invention in detail with reference to the accompanying drawings. The embodiments do not constitute any limitation on the embodiments of the present invention.

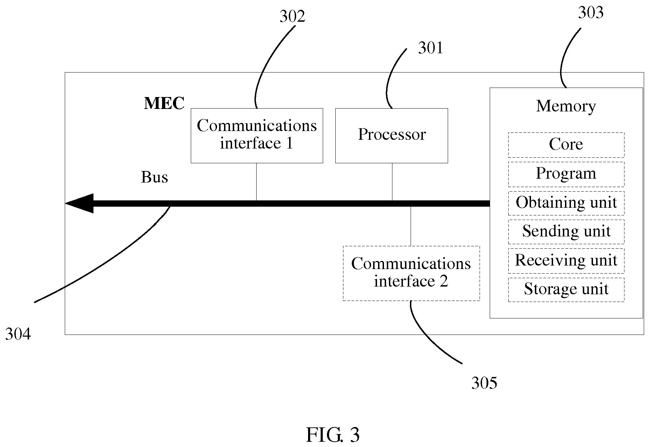

FIG. 3 is a schematic structural diagram of an apparatus for determining a bearer for a mobile edge computing according to an embodiment of the present invention. The apparatus may be located in an LTE system, a UMTS system, or the like. As shown in FIG. 3, the MEC includes a processor 301 and a communications interface 302/305. A memory 303 and a bus 304 are further shown in the figure. The processor 301, the communications interface 302/305, and the memory 303 are connected by using the bus 304 and complete mutual communication. The memory 303 is configured to store a program. The processor 301 reads the program stored in the memory, and executes the program, to send and receive data and an instruction for an external device by using the communications interface 302/305.

It should be noted that the processor 301 herein may be one processor, or may be a general term of multiple processing elements. For example, the processor may be a central processing unit (Central Processing Unit, CPU) or may be an application-specific integrated circuit (Application Specific Integrated Circuit, ASIC), or may be configured into one or more integrated circuits for implementing this embodiment of the present invention, such as one or more microprocessors (digital signal processor, DSP) or one or more field programmable gate arrays (Field Programmable Gate Array, FPGA).

The memory 303 may be one storage apparatus, or may be a general term of multiple storage elements, and is configured to store executable program code, or parameters, data, and the like required for running of an access network management device. The memory 303 may include a random access memory (RAM) or may include a non-volatile memory (non-volatile memory), such as a disk memory or a flash (Flash) memory.

The bus 304 may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The bus 304 may be classified into an address bus, a data bus, a control bus, and the like. For ease of representation, only one bold line is used in FIG. 3 for representation, but it does not represent that there is only one bus or one type of bus.

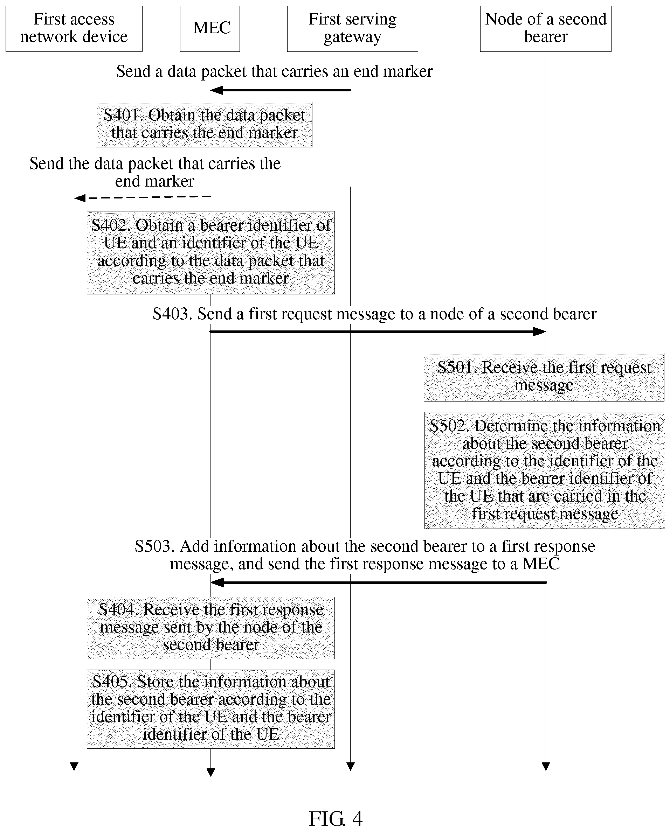

FIG. 4 is a flowchart of a method for determining a bearer for a mobile edge computing according to an embodiment of the present invention. The method may be performed by a MEC, such as the apparatus shown in FIG. 3. A program for implementing the method embodiment may be stored in the memory 303. The processor 301 reads the program stored in the memory and performs steps of the method embodiment, to send and receive data and an instruction for an external device by using the communications interface 302/305.

The method shown in FIG. 4 is applicable to a handover procedure of UE from a first access network device to a second access network device. In this process, data of the UE is handed over for transmission from a first bearer between the first access network device (that is, a source access network device or an access network device before the handover) and a first serving gateway (that is, a source serving gateway, or a serving gateway before the handover)to a second bearer between the second access network device (that is, a target access network device, or an access network device after the handover) and a second serving gateway (that is, a target serving gateway, or a serving gateway after the handover).

It should be noted that, each embodiment of the present invention may be applied to the handover procedure of the UE. Specifically, the related handover includes a handover between access network devices, and may further include a handover between serving gateways.

The handover may be an inter-system handover. Specifically, the handover may be a handover between a same type of system, such as a handover between LTE systems, or may be a handover between different types of systems, such as a handover between an LTE system and a UMTS system.

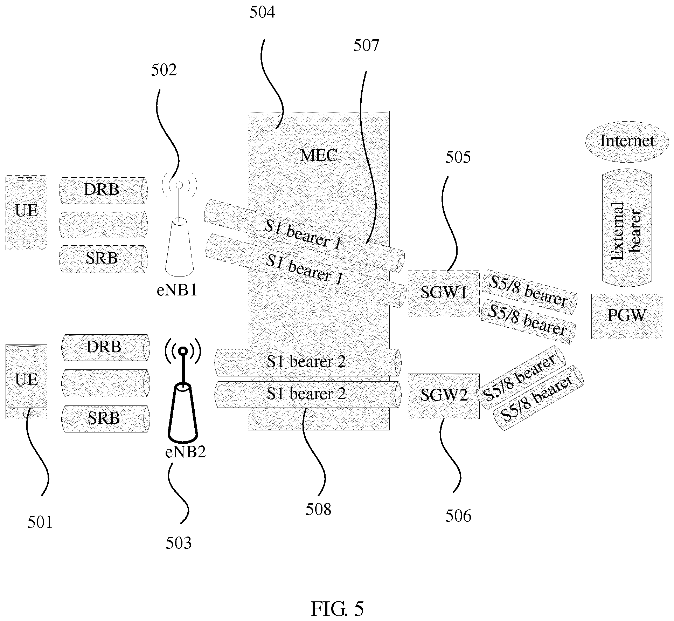

Alternatively, the handover may be an intra-system handover, such as a handover only between access network devices within a same system, that is, a handover within a serving gateway. For another example, the handover is a handover between serving gateways within a same system. That is, a handover occurs both between access network devices and between serving gateways. For example, in an EPS system shown in FIG. 5, during a handover, a base station interacting with UE 501 may be handed over from a source base station 502 to a target base station 503, and a source serving gateway 505 is handed over to a target serving gateway 506. Correspondingly, a bearer between the base station and an SGW is handed over from a first bearer 507 (an S1 bearer 1, which corresponds to an eNB 1 and an SGW 1) to a second bearer 508 (an S1 bearer 2, which corresponds to an eNB 2 and an SGW 2). In a specific handover procedure, the handover may occur only between access network devices that exchange data with the UE, and no handover occurs between serving gateways. In this case, the source serving gateway 505 and the target serving gateway 506 are a same serving gateway. Further, nodes such as the source base station 502, a MEC 504, and the source serving gateway 505 are bearer nodes before the handover; and the target base station 503, the MEC 504, and the target serving gateway 506 are bearer nodes after the handover.

It should be understood that, FIG. 5 is only a schematic diagram, and the SGW, the S1 bearer, and the eNB in the figure are only examples for description and do not limit types of an operating system, a bearer, and a base station to which this embodiment of the present invention is applicable.

Specifically, in a UMTS system, the handover includes a handover to a bearer that is between a base station controller and a serving gateway SGSN that exchange data with the UE.

It should be understood that, the handovers of the UE are only examples, but not limited thereto.

This embodiment of the present invention may also be applicable to another handover of UE.

Specifically, the embodiment shown in FIG. 4 are described as follows:
S401. The MEC obtains a data packet that carries an end marker, where the end marker is used to indicate that the UE is in a handover procedure.

It should be noted that, before the data of the UE is handed over to the second access network device, the first serving gateway may send the data packet that carries the end marker to the first access network device. The end marker is used to indicate that the data of the UE is in a handover procedure, and the data packet is the last data packet that is sent by using the first bearer. To avoid loss of a data packet, there may be multiple data packets that carry the end marker.

Specifically, the data packet that carries the end marker may further carry a TEID of the first bearer. Further, the data packet that carries the end marker may further carry a TEID of the first access network device. For example, as shown in FIG. 5, in a data handover procedure of the UE 501, the source serving gateway 505 may send a data packet that carries an end marker to the source base station 502 by using the first bearer 507, and the data packet that carries the end marker may include a TEID of the source base station 502. It should be noted that, the TEID of the first bearer may include the TEID of the first access network device and/or a TEID of the first serving gateway.

Specifically, in an EPS system, a structure of the data packet that carries the end marker may be shown in Table 1.

**Table 1**

| | | | | | |
|---|---|---|---|---|---|
| 254 | eNB TEID | ... | IP data packet | ... | ... |

| | | | | | |
|---|---|---|---|---|---|
| Note: In Table 1, 254 is an identifier of the end marker, and the eNB TEID is the TEID of the first access network device. | | | | | |

Specifically, when a handover of the UE between serving gateways occurs, S401 may be specifically implemented in the following manners:
In a manner 1, the first serving gateway usually sends the data packet that carries the end marker to the first access network device by using the MEC. Therefore, the MEC may obtain the data packet that carries the end marker and that is sent by the first serving gateway.
In a manner 2, the first serving gateway directly sends the data packet that carries the end marker to the MEC.

Specifically, when a handover of the UE within a serving gateway occurs, that is, when the serving gateway communicating with the UE remains unchanged and the first serving gateway and the second serving gateway are a same gateway, S401 may be specifically implemented in the following manners:
In a manner 1, the serving gateway that serves the UE sends the data packet that carries the end marker to the access network device by using the MEC. Therefore, the MEC may obtain the end marker sent by the first serving gateway.
In a manner 2, the serving gateway that serves the UE directly sends the data packet that carries the end marker to the MEC.

S402. The MEC obtains a bearer identifier of the UE and an identifier of the UE according to the data packet that carries the end marker.

Specifically, the bearer identifier of the UE may be an ID for identifying a bearer of the UE. For example, in an EPS system, the bearer identifier may be an EPS bearer ID for identifying an EPS bearer, or an ERAB ID for identifying an ERAB. Alternatively, the bearer identifier of the UE may be a TEID of a bearer of the UE. Specifically, the bearer identifier may be the TEID of the first bearer, or may be the TEID of the first access network device or the TEID of the first serving gateway.

The identifier of the UE is used to identify the UE. For example, the identifier of the UE may be a UE IP, a C-RNTI (Cell Radio Network Temporary Identifier, cell radio network temporary identifier), an S-TMSI (SAE-Temporary Mobile Subscriber Identity, SAE-temporary mobile subscriber identity), an IMSI (International Mobile Subscriber Identity, international mobile subscriber identity), a UE IP and APN (Access Point Name, access point name), or an MSISDN (Mobile Station International ISDN number, mobile station international ISDN number), or the like.

It should be noted that, the MEC usually stores the TEID of the first bearer, which may specifically include: the TEID of the first access network device and the TEID of the first serving gateway. The TEID of the first serving gateway may be further determined according to the TEID of the first access network device that is carried in the data packet that carries the end marker.

S403. The MEC sends a first request message to a node of the second bearer, where the first request message may carry the identifier of the UE and the bearer identifier of the UE, and the request message is used to request information about the second bearer.

Specifically, the node of the second bearer may be the second access network device, the second serving gateway, an MME, or a CNIS (Core Network Information Service, core network information service). For an inter-system handover, the node of the second bearer may be a second MME (that is, a target MME or an MME after the handover), or the like.

In addition, the MEC usually prestores an address of the node of the second bearer. For example, the node of the second bearer may be a CNIS, and the CNIS remains unchanged in a handover procedure. The MEC prestores an address of the CNIS address. Therefore, the MEC may send the first request message to the CNIS according to the prestored address of the CNIS.

S501. The node of the second bearer receives the first request message sent by the MEC.

S502. The node of the second bearer determines the information about the second bearer according to the identifier of the UE and the bearer identifier of the UE that are carried in the first request message.

It should be noted that, the node of the second bearer usually stores the information about the second bearer, and the information about the second bearer is usually stored corresponding to the identifier of the UE and the bearer identifier of the UE. After the node of the second bearer receives the first request message sent by the MEC, the node of the second bearer may determine the corresponding information about the second bearer according to the identifier of the UE and the bearer identifier of the UE that are carried in the first request message.

S503. The node of the second bearer adds the information about the second bearer to a first response message, and sends the first response message to the MEC.

S404. The MEC receives the first response message sent by the node of the second bearer, where the first response message carries the information about the second bearer.

It should be noted that, the information about the second bearer may be used to determine the second bearer, and may specifically include a TEID of the second access network device and a TEID of the second serving gateway.

S405. The MEC stores the information about the second bearer according to the identifier of the UE and the bearer identifier of the UE. For example, the information about the second bearer may be stored in the memory 303 shown in FIG. 3.

In a specific implementation process of this embodiment of the present invention, step 405 may be implemented in the following manners:
In a manner 1, a correspondence between the information about the second bearer and information about the first bearer is stored according to the information about the second bearer.

The foregoing correspondence includes the information about the second bearer.

Specifically, when there is data of UE to be transmitted by using the first bearer, the second bearer is determined according to the foregoing stored information about the second bearer, and the data is transmitted by using the second bearer. For example, in an EPS system, the MEC receives information, about a second S1 bearer, that corresponds to the UE and that is sent by the CNIS, and the MEC stores a correspondence between the information about the second S1 bearer and information about a first S1 bearer. A correspondence, stored on the MEC, of an S1 bearer may be shown in Table 2.

**Table 2**

| | | | | | |
|---|---|---|---|---|---|
| UE ID | EPS bearer ID/ERAB ID | Status 1 | eNB TEID 1 | SGW TEID 1 | ... |
| | | Status 2 | eNB TEID 2 | SGW TEID 2 | ... |
| | | ... | ... | ... | ... |
| ... | ... | ... | ... | ... | ... |

| | | | | | |
|---|---|---|---|---|---|
| Note: The status 1 and the status 2 in Table 2 may correspond to before the handover and after the handover. | | | | | |

In a manner 2, the information about the first bearer is replaced with the information about the second bearer.

In the manner 2, the MEC stores only information about a bearer in one status corresponding to an identifier and a bearer identifier of a same UE. Therefore, storage load can be reduced.

In conclusion, in this embodiment of the present invention, by obtaining a data packet that carries an end marker, the MEC determines that a handover of the UE to a device communicating with the UE occurs, and obtains corresponding information about the second bearer from the node of the second bearer according to information carried in the data packet that carries the end marker. Further, the MEC stores the information about the second bearer according to the identifier of the UE and the bearer identifier of the UE, and can transmit data of the UE by using the second bearer when data transmission is to be performed by using a bear, thereby ensuring normal transmission of the data of the UE.

Optionally, in a first implementation scenario of the embodiment, step S402 specifically includes:
determining, by the MEC, the identifier of the UE and the bearer identifier of the UE according to the TEID of the first bearer, where the identifier of the UE is an IP address of the UE, and the bearer identifier of the UE is the TEID of the first bearer.

In the foregoing implementation scenario, the node of the second bearer may be specifically a core network information service CNIS.

Optionally, in a second implementation scenario of the embodiment, step S402 specifically includes:
determining, by the MEC, an identifier of a node of the first bearer according to the data packet that carries the end marker;
sending, by the MEC, a second request message that carries the TEID of the first bearer to the node of the first bearer according to the identifier of the node of the first bearer, where the second request message is used to request the identifier of the UE and the bearer identifier of the UE; and
receiving, by the MEC, a second response message sent by the node of the first bearer, where the second response message carries the identifier of the UE and the bearer identifier of the UE. Further, the node of the first bearer may be the first access network device, such as a source base station or a source RNC, and the node of the second bearer may be the second access network device, such as a target base station or a target RNC. The identifier of the UE may be a cell radio network temporary identifier CRNIT or a temporary mobile subscriber identity S-TMSI.

It should be noted that, when the identifier of the UE is a CRNIT, the first request message further carries an identifier of the first access network device.

Further, the node of the first bearer may be the first serving gateway; and
when the handover is a handover between different systems, the first serving gateway is a source SGSN of the UE, and the node of the second bearer is a target MME or a target SGSN of the UE; or
when the handover is a handover within a same system, the first serving gateway and the node of the second bearer are both an SGSN that serves the UE.

The identifier of the UE is an international mobile subscriber identity IMSI, an IP address and an access point name APN of the UE, or a mobile station international subscriber directory number MSISDN.

It should be noted that, the MEC may prestore the identifier of the node of the first bearer.

Specifically, the MEC may determine related information of the first bearer according to the TEID of the first bearer that is carried in the data packet that carries the end marker, and obtain the identifier of the node of the first bearer. Further, the MEC may determine related information of the first access network device according to the TEID of the first access network device that is carried in the data packet that carries the end marker, and obtain the identifier of the first access network device. Optionally, the MEC may also determine the prestored TEID of the first bearer according to the TEID of the first access network device that is carried in the data packet that carries the end marker, obtain the TEID of the first serving gateway, determine related information of the first serving gateway according to the TEID of the first serving gateway, and obtain an identifier of the first serving gateway.

Optionally, the data packet that carries the end marker further carries an IP address of the first access network device or the first serving gateway. According to the IP address of the first access network device or the first serving gateway, the MEC may determine related information of the first access network device or the first serving gateway and obtain the identifier of the first access network device or the first serving gateway.

Optionally, in a third implementation scenario of the embodiment, step S403 specifically includes:
determining, by the MEC, an identifier of the first serving gateway according to the data packet that carries the end marker;
sending, by the MEC, a third request message that carries the TEID of the first bearer to the first serving gateway according to the identifier of the first serving gateway, where the third request message is used to request an identifier of a node of the first bearer of the UE;
receiving, by the MEC, a third response message sent by the first serving gateway, where the third response message carries the identifier of the node of the first bearer;
sending, by the MEC according to the identifier of the node of the first bearer, a fourth response message that carries the TEID of the first bearer, where the fourth response message is used to request the identifier of the UE and the bearer identifier of the UE; and
receiving, by the MEC, a fourth response message sent by the node of the first bearer, where the fourth response message carries the identifier of the UE and the bearer identifier of the UE.

The identifier of the UE is an IMSI, an IP address and an APN of the UE, or an MSISDN.

The first serving gateway may be an SGW; and
when the handover is a handover between different systems, the node of the first bearer is a source MME of the UE, the node of the second bearer is a target MME or a target SGSN of the UE; or
when the handover is a handover within a same system, the node of the first bearer and the node of the second bearer are both an MME that serves the UE.

Specifically, in the foregoing second or third implementation scenario, the bearer identifier of the UE may be an EPS bearer identifier, or an ERAB bearer identifier, or an S1 bearer identifier.

Further optionally, in the foregoing second or third implementation scenario, before the sending, by the MEC, a first request message to a node of the second bearer in step S404, the foregoing method further includes:
obtaining, by the MEC, an identifier of the node of the second bearer.

Specifically, the identifier of the node of the second bearer may be sent by the node of the first bearer to the MEC, for example, added to the second response message or the fourth response message. Details are not described herein.

It should be noted that, when the handover is a handover between different types of systems, the MEC may determine, according to an identifier of the target access network device that is returned by the source access network device, whether the handover is a handover between different types of systems (protocols used in different systems may be different), and the MEC may further perform conversion on identifiers of corresponding devices according to a relationship between the different protocols. The handover between different types of systems is a handover between systems of different standards. For example, the handover may be a handover between a 3G system and a 4G system or a handover between a 2G system and a 3G system, or may be a handover between a 4G system and a future system. This is not limited herein.

In a specific implementation process, this embodiment of the present invention may be specifically implemented in different manners in different handover scenarios. The following further provides a detailed description with reference to the specific embodiments and the accompanying drawings by using an example in which a first access network device is a source access network device, a first serving gateway is a source serving gateway, a second access network device is a target access network device, and a second serving gateway is a target serving gateway.

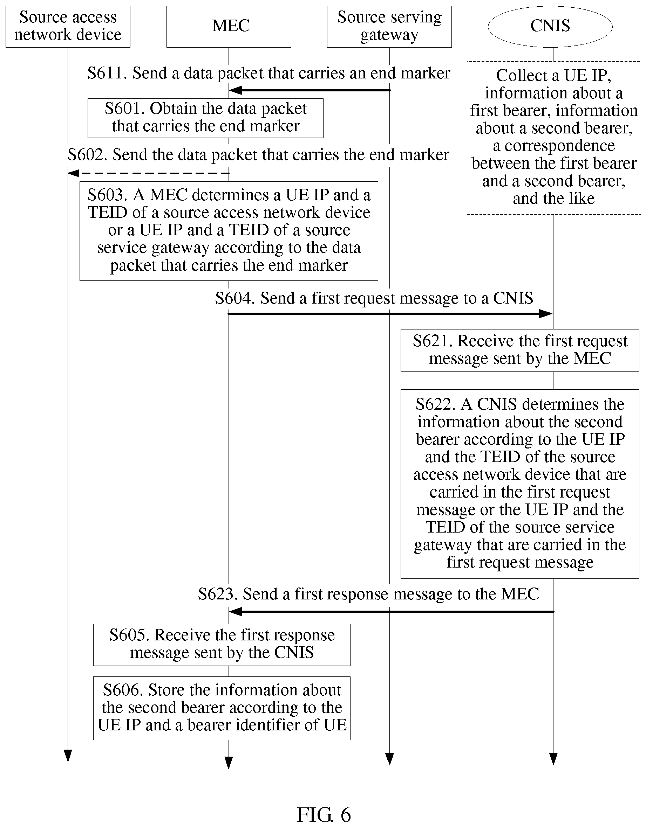

FIG. 6 is a flowchart of a method for determining a bearer for a mobile edge computing according to another embodiment of the present invention. The method may be performed by a MEC, such as the apparatus shown in FIG. 3. A program for implementing the method embodiment may be stored in the memory 303. The processor 301 reads the program stored in the memory and performs steps of the method embodiment, to send and receive data and an instruction for an external device (for example, the external device may be a source serving gateway, a CNIS, or a source access network device) by using the communications interface 302/305.

As shown in FIG. 6, this embodiment of the present invention is applicable to an inter-system or intra-system handover. It should be noted that, in this embodiment of the present invention, a node of a second bearer is a CNIS. Details are as follows:
In a handover procedure, the CNIS may collect a UE IP, information about a first bearer, information about the second bearer, a correspondence between the first bearer and the second bearer, and the like. The information about the first bearer may be used to determine the first bearer, and may specifically include a TEID of a source access network device and a TEID of a source serving gateway. For example, in an EPS system, information collected by the CNIS may be shown in Table 3.

**Table 3**

| | | | | | |
|---|---|---|---|---|---|
| Before a handover of UE | UE IP | EPS bearer ID/ERAB ID | eNB TEID1 | SGW TEID1 | ... |
| After a handover of UE | UE IP | EPS bearer ID/ERAB ID | eNB TEID2 | SGW TEID2 | ... |
| ... | ... | ... | ... | ... | ... |

S611. The source serving gateway sends, to the source access network device, a data packet that carries an end marker by using a MEC.

S601. The MEC obtains the data packet that carries the end marker, where the data packet carries a TEID of the first bearer.

An ID of the first bearer may be specifically a TEID of the source access network device.

For details of obtaining of the data packet that carries the end marker, refer to related descriptions of step S401. Details are not described herein.

Optionally, in S602, the MEC sends, to the source access network device, the data packet that carries the end marker.

S603. The MEC determines a UE IP and a TEID of the source access network device or a UE IP and a TEID of the source serving gateway according to the data packet that carries the end marker.

Specifically, the MEC may determine the bearer that receives the data packet that carries the end marker, further determine the data packet transmitted by using the bearer, determine information related to UE in the data packet, and obtain the UE IP. In addition, the information related to the UE may further include a bearer identifier of the UE. It should be noted that, the MEC may prestore a data packet corresponding to each bearer.

Optionally, information related to the UE may also be extracted from the data packet that carries the end marker, to obtain the UE IP. It should be noted that, the TEID of the source access network device may be obtained from the data packet that carries the end marker and that is obtained in step S601. Optionally, the MEC usually stores information about the first bearer. Specifically, the MEC may obtain the TEID of the source access network device by using the data packet that carries the end marker, further determine information about the first bearer that corresponds to the TEID of the source access network device, and obtain the TEID of the source serving gateway.

S604. The MEC sends a first request message to the CNIS, where the request message carries the UE IP and the TEID of the source access network device or the UE IP and the TEID of the source serving gateway, and the first request message is used to request information about the second bearer, that is, information about a bearer after a handover.

S621. The CNIS receives the first request message sent by the MEC.

S622. The CNIS determines the information about the second bearer according to the UE IP and the TEID of the source access network device that are carried in the first request message or the UE IP and the TEID of the source serving gateway that are carried in the first request message.

It should be noted that, the CNIS service determines the correspondingly stored information about the second bearer according to content stored in the CNIS and according to the UE IP and the TEID of the source access network device that are carried in the first request message sent by the MEC or the UE IP and the TEID of the source serving gateway that are carried in the first request message sent by the MEC.

S623. The CNIS adds the information about the second bearer to a first response message, and sends the first response message to the MEC.

S605. The MEC receives the first response message returned by the CNIS, where the first response message carries the information about the second bearer.

S606. The MEC stores the information about the second bearer according to the UE IP and a bearer identifier of UE.

It should be noted that, the bearer identifier of the UE in step S606 may be an EPS bearer ID or an ERAB ID. The EPS bearer ID or the ERAB ID may be added by the CNIS to the first response message, and the first response message is sent to the MEC. Optionally, the bearer identifier of the UE may also be the TEID of the source access network device and/or the TEID of the source serving gateway.

It should be noted that, if the handover is a handover within a serving gateway, because no handover occurs on the serving gateway, the MEC stores an address of the serving gateway. In addition, the serving gateway stores the information about the second bearer. Therefore, the MEC may further use the serving gateway that serves the UE, as the node of the second bearer, and sends the first request message to the serving gateway.

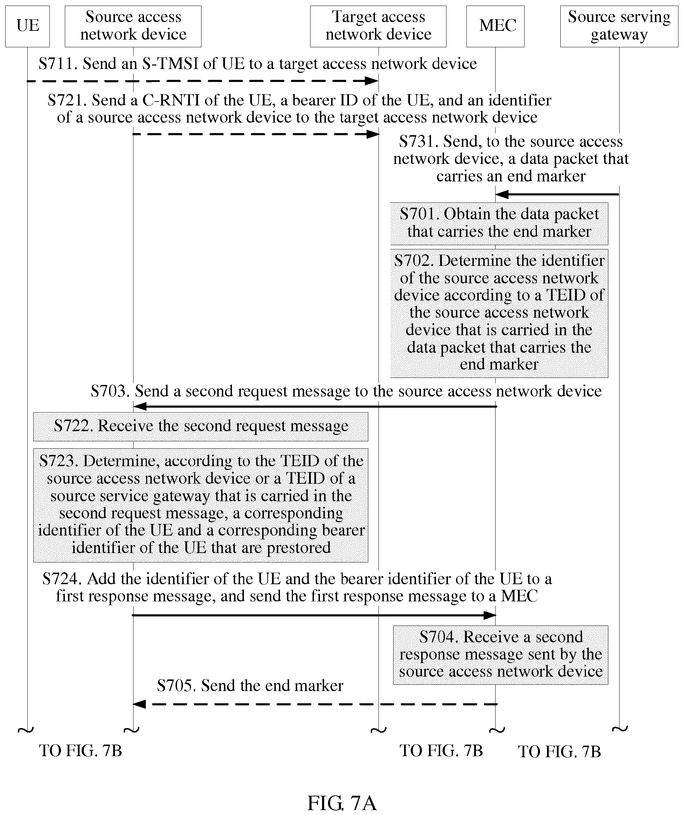

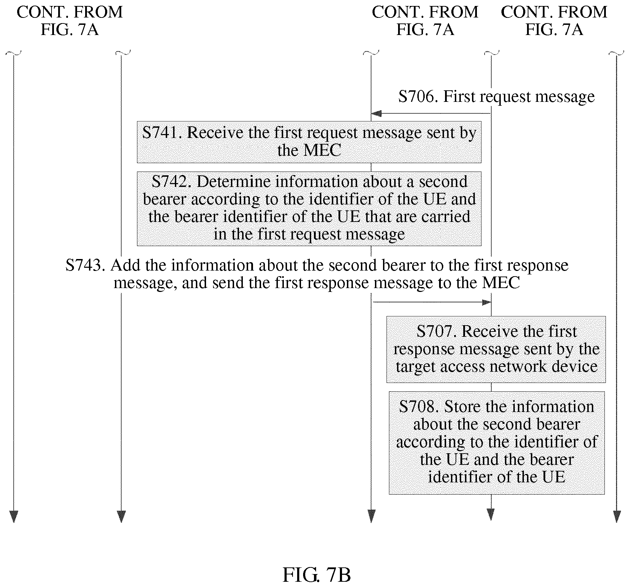

FIG. 7 is a flowchart of a method for determining a bearer for a mobile edge computing according to still another embodiment of the present invention. The method may be performed by a MEC, such as the apparatus shown in FIG. 3. A program for implementing the method embodiment may be stored in the memory 303. The processor 301 reads the program stored in the memory and performs steps of the method embodiment, to send and receive data and an instruction for an external device (for example, the external device may be a target access network device, a source serving gateway, or a source access network device) by using the communications interface 302/305.

As shown in FIG. 7, this embodiment of the present invention is applicable to an inter-system or intra-system handover. It should be noted that, in this embodiment of the present invention, a node of a second bearer may be a target access network device, or for a handover outside a serving gateway, a node of a second bearer may be a target serving gateway. Details are as follows:

S731. A source serving gateway, to a source access network device, sends a data packet that carries an end marker.

S701. A MEC obtains the data packet that carries the end marker, where the data packet carries a TEID of the source access network device.

For details of obtaining of the data packet that carries the end marker, refer to related descriptions of step S401. Details are not described herein.

S702. The MEC determines an identifier of the source access network device according to the TEID of the source access network device that is carried in the data packet that carries the end marker.

Alternatively, for a handover outside a serving gateway, step S702 may be: the MEC determines an identifier of the source serving gateway according to the TEID of the source access network device.

For a specific manner of determining the identifier of the source access network device or the identifier of the source serving gateway, refer to the related description of the embodiment shown in FIG. 4. Details are not described herein.

S703. The MEC sends a second request message to the source access network device, where the second request message may carry the TEID of the source access network device or a TEID of the source serving gateway, and the second request message is used to request an identifier of UE and a bearer identifier of the UE.

Alternatively, for a handover outside a serving gateway, step S703 may further be: the MEC sends a second request message to the source serving gateway.

For a specific manner of determining the TEID of the source access network device or the TEID of the source serving gateway, refer to the related description of the embodiment shown in FIG. 4. Details are not described herein.

S722. The source access network device receives the second request message.

S723. The source access network device determines, according to the TEID of the source access network device or the TEID of the source serving gateway that is carried in the second request message, the identifier of the UE and the bearer identifier of the UE that are correspondingly prestored. Specifically, the identifier of the UE may be an S-TMSI of the UE or a C-RNTI of the UE, and the bearer identifier of the UE may be a bearer ID of the UE.

Optionally, the source access network device may further determine an identifier of a target access network device according to the second request message.

S724. The source access network device adds the identifier of the UE and the bearer identifier of the UE to a first response message, and sends the first response message to the MEC.

Alternatively, for a handover outside a serving gateway, steps S722, S723, and S724 may be further performed by the source serving gateway.

S704. The MEC receives a first response message sent by the source access network device.

Alternatively, for a handover outside a serving gateway, step S704 may further be: the MEC receives a second response message sent by a source access network device.

Optionally, in S705, the MEC sends, to the source access network device, the data packet that carries the end marker.

S706. The MEC sends a first request message to a target access network device, where the request carries the identifier of the UE and the bearer identifier of the UE, and the first request message is used to request information about the second bearer.

Alternatively, for a handover outside a serving gateway, step S706 may further be: the MEC sends a first request message to a target serving gateway.

S741. The target access network device receives the first request message sent by the MEC.

S742. The target access network device determines the information about the second bearer according to the identifier of the UE and the bearer identifier of the UE that are carried in the first request message.

It should be noted that, before step S731, the method may further include the following steps.

Optionally, in S711, the UE sends an S-TMSI of the UE to the target access network device.

Optionally, in S721, the source access network device sends a C-RNTI of the UE, the identifier of the source access network device, and a bearer ID of the UE to the target access network device. Specifically, the bearer ID of the UE in an EPS system may be an ERAB ID.

It may be learned from steps S711 and S721 that, the target access network device may store the S-TMSI of the UE, the C-RNTI of the UE and the identifier of the source access network device, the bearer ID of the UE, and the like. Specifically, the target access network device stores the information about the second bearer corresponding to the S-TMSI of the UE and the bearer ID of the UE, or stores the information about the second bearer corresponding to the C-RNTI of the UE, the identifier of the source access network device, and the bearer ID of the UE.

Specifically, the target access network device determines the information about the second bearer according to the S-TMSI of the UE and the bearer ID of the UE that are carried in the first request message.

Optionally, the target access network device determines the information about the second bearer according to the C-RNTI of the UE, the identifier of the source access network device, and the bearer ID of the UE that are carried in the first request message.

When the identifier of the UE that is carried in the first request message in S706 is the CRNIT of the UE, the first request message may further carry the identifier of the source access network device.

S743. The target access network device adds the information about the second bearer to the first response message, and sends the first response message to the MEC.

Alternatively, for a handover outside a serving gateway, steps S741, S742, and S743 may be further performed by the target serving gateway.

For specific content of the information about the second bearer, refer to the related description of the embodiment shown in FIG. 4. Details are not described herein.

S707. The MEC receives the first response message sent by the target access network device, where the first response message carries the information about the second bearer.

For specific content of first response message in step S707, refer to related descriptions in step S404 of the embodiment shown in FIG. 4. Details are not described herein.

S708. Store the information about the second bearer according to the identifier of the UE and the bearer identifier of the UE.

In conclusion, in this embodiment of the present invention, the source serving gateway or the access network device is determined according to information that is carried in the data packet that carries the end marker, and the identifier of the UE, the bearer identifier of the UE, and the identifier of the node of the corresponding second bearer are requested from the source serving gateway or the access network device. Related information, that is, the information about the second bearer, of the UE is requested from the node of the second bearer by using the identifier of the UE, and then the information about the second bearer is stored.

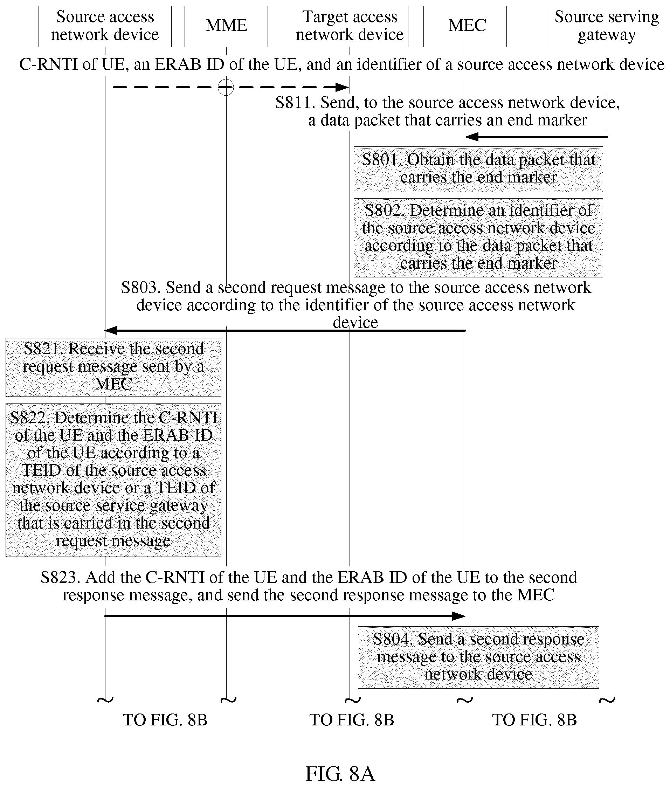

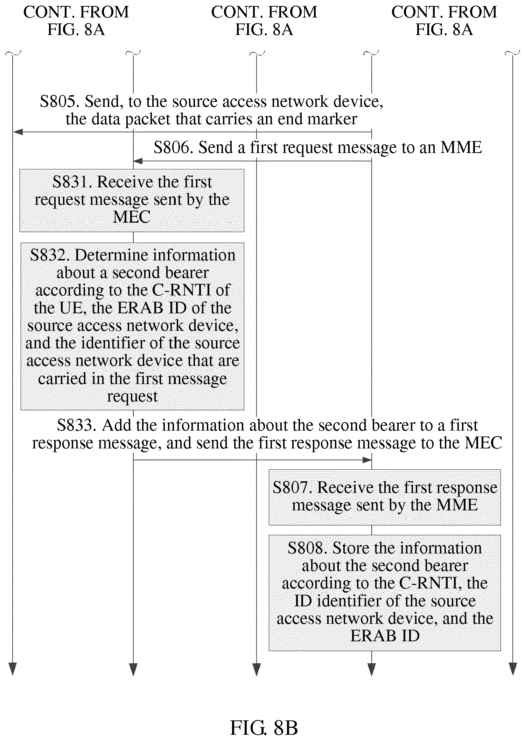

FIG. 8 is a flowchart of a method for determining a bearer for a mobile edge computing according to still another embodiment of the present invention. The method may be performed by a MEC, such as the apparatus shown in FIG. 3. A program for implementing the method embodiment may be stored in the memory 303. The processor 301 reads the program stored in the memory and performs steps of the method embodiment, to send and receive data and an instruction for an external device (such as a source access network device, an MME, or a target access network device) by using the communications interface 302/305.

As shown in FIG. 8, this embodiment of the present invention is applicable to an intra-system handover. It should be noted that, in this embodiment of the present invention, a node of a second bearer is an MME. Details are as follows:
S811. A source serving gateway sends, to a source access network device, a data packet that carries an end marker.
S801. The MEC obtains the data packet that carries the end marker, where the data packet carries a TEID of the source access network device.

For details of obtaining of the data packet that carries the end marker, refer to related descriptions of step S401. Details are not described herein.

S802. The MEC determines an identifier of the source access network device according to the data packet that carries the end marker.

For a manner of determining the identifier of the source access network device, refer to the related description of the manner of determining the identifier of the node of the first bearer in the embodiment shown in FIG. 4. Details are not described herein.

S803. The MEC sends a second request message to the source access network device according to the identifier of the source access network device, where the second request message carries the TEID of the source access network device or a TEID of the source serving gateway, and the second request message is used to request a C-RNTI of UE and an ERAB ID of the UE.

For a specific manner of determining the TEID of the source access network device or the TEID of the source serving gateway, refer to the related description of the embodiment shown in FIG. 4. Details are not described herein.

S821. The source access network device receives the second request message sent by the MEC.

S822. The source access network device determines the C-RNTI of the UE and the ERAB ID of the UE according to the TEID of the source access network device or the TEID of the source serving gateway that is carried in the second request message.

S823. The source access network device adds the C-RNTI of the UE and the ERAB ID of the UE to a second response message, and sends the second response message to the MEC.

S804. The MEC receives the second response message sent by the source access network device.

Optionally, in S805, the MEC sends, to the source access network device, the data packet that carries the end marker.

S806. The MEC sends a first request message to the MME, where the first request message carries the C-RNTI of the UE, the identifier of the source access network device, and the ERAB ID of the UE, and the first request message is used to request information about the second bearer.

Specifically, the identifier of the source access network device that is carried in the first request message may be the identifier of the source access network device that is determined in S802. Optionally, for the identifier of the source access network device that is carried in the first request message, the identifier of the source access network device may be added by the source access network device to the second response message, and the second response message is sent to the MEC. The MEC obtains the identifier of the source access network device in the second response message.

S831. The MME receives the first request message sent by the MEC.

S832. The MME determines the information about the second bearer according to the C-RNTI of the UE, the identifier of the source access network device, and the ERAB ID of the UE that are carried in the first message request.

In a handover procedure, the source access network device sends data such as the C-RNTI of the UE, the identifier of the source access network device, and the ERAB ID of the UE to the target access network device, and the data, when being sent, is to be forwarded by the MME. Therefore, the MME may obtain the data and store the data corresponding to the information about the second bearer.

For specific content of the information about the second bearer, refer to the related description of the embodiment shown in FIG. 4. Details are not described herein.

S833. The MME adds the information about the second bearer to a first response message, and sends the first response message to the MEC.

S807. The MEC receives the first response message sent by the MME, where the first response message carries the information about the second bearer.

S808. The MEC stores the information about the second bearer according to the C-RNTI, the identifier of the source access network device, and the ERAB ID.

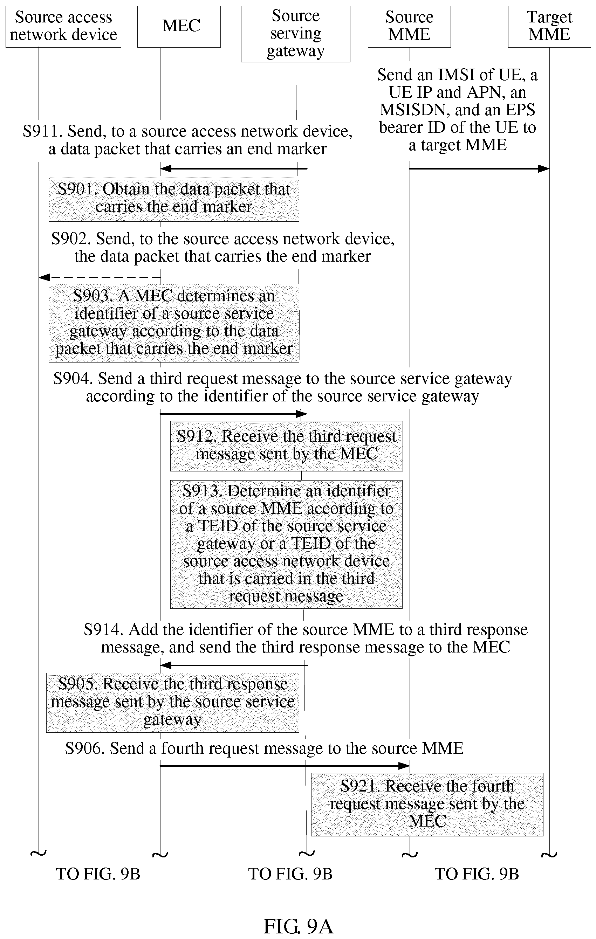

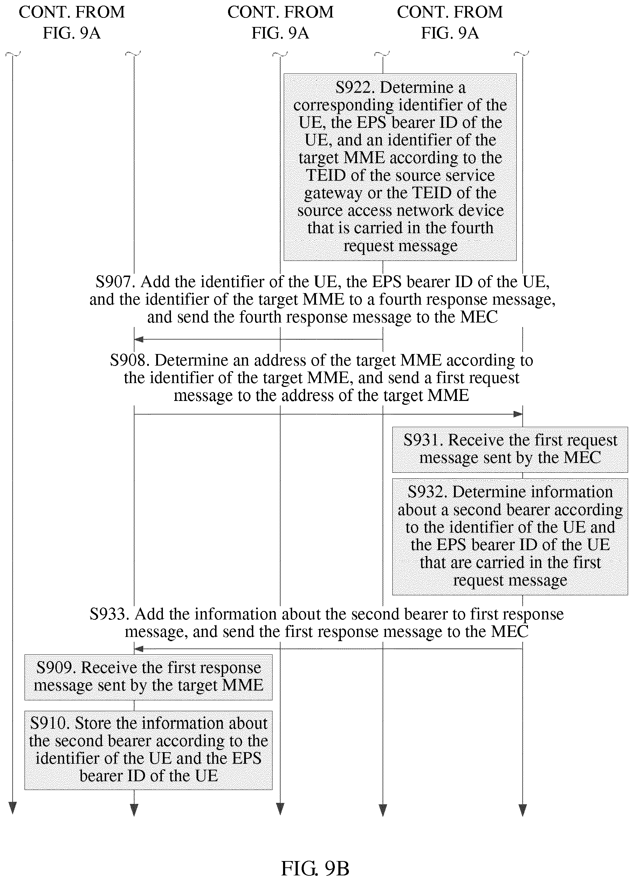

FIG. 9 is a flowchart of a method for determining a bearer for a mobile edge computing according to still another embodiment of the present invention. The method may be performed by a MEC, such as the apparatus shown in FIG. 3. A program for implementing the method embodiment may be stored in the memory 303. The processor 301 reads the program stored in the memory and performs steps of the method embodiment, to send and receive data and an instruction for an external device (for example, the external device may be a source access network device, a source serving gateway, a source MME, or a target MME) by using the communications interface 302/305.

As shown in FIG. 9, this embodiment of the present invention is applicable to an inter-system handover, and is further applicable to a handover between MMEs. In this case, an MME communicating with UE is handed over from a first MME (that is, a source MME or an MME before a handover) to a second MME (that is, a target MME or an MME after the handover). It should be noted that, in this embodiment of the present invention, a node of a second bearer is a target MME. Details are as follows:
In a handover procedure, the source MME sends an IMSI of UE, a UE IP and APN, or an MSISDN, and an EPS bearer ID of the UE to the target MME.

That is, both the source MME and the target MME store the IMSI, the UE IP and APN, or the MSISDN of the UE in a handover procedure, and the EPS bearer ID of the UE. The target MME stores information about the second bearer (information about a bearer after the handover). The source MME stores an identifier of the target MME.

S911. A source serving gateway sends, to a source access network device, a data packet that carries an end marker.

S901. The MEC obtains the data packet that carries the end marker, where the data packet carries a TEID of the source access network device.

For details of obtaining of the data packet that carries the end marker, refer to related descriptions of step S401. Details are not described herein.

Optionally, in S902, the MEC sends, to the source access network device, the data packet that carries the end marker.

S903. The MEC determines an identifier of the source serving gateway according to the data packet that carries the end marker.

For a manner of determining the identifier of the source serving gateway, refer to the related description of the manner of determining the identifier of the node of the first bearer in the embodiment shown in FIG. 4. Details are not described herein.

S904. The MEC sends a third request message to the source serving gateway according to the identifier of the source serving gateway, where the third request message carries a TEID of the source serving gateway or the TEID of the source access network device, and the third request message is used to request an identifier of the source MME.

For a specific manner of determining the TEID of the source access network device or the TEID of the source serving gateway, refer to the related description of the embodiment shown in FIG. 4. Details are not described herein.

S912. The source serving gateway receives the third request message sent by the MEC.

S913. The source serving gateway determines the identifier of the source MME according to the TEID of the source serving gateway or the TEID of the source access network device that is carried in the third request message.

It should be noted that, the source serving gateway may store the identifier of the target MME, and may store the identifier of the target MME corresponding to information about a first bearer. Specifically, the identifier of the target MME may be stored corresponding to the TEID of the source serving gateway or the TEID of the source access network device.

S914. The source serving gateway adds the identifier of the source MME to a third response message, and sends the third response message to the MEC.

S905. The MEC receives the third request message sent by the MEC.

S906. The MEC finds an address of the source MME according to the identifier of the source MME, and sends a fourth request message to the source MME, where the fourth request message carries the TEID of the source serving gateway or the TEID of the source access network device, and the fourth request message is used to request an identifier of the UE, an EPS bearer ID of the UE, and the identifier of the target MME.

S921. The source MME receives the fourth request message sent by the MEC.

S922. The source MME determines the corresponding identifier of the UE, the EPS bearer ID of the UE, and the identifier of the target MME according to the TEID of the source serving gateway or the TEID of the source access network device that is carried in the fourth request message.

Specifically, the identifier of the UE may be the IMSI of the UE or the MSISDN of the UE, or may be a combination of the UE IP and APN.

S923. The source MME adds the identifier of the UE, the EPS bearer ID of the UE, and the identifier of the target MME to a fourth response message, and sends the fourth response message to the MEC.

S907. The MEC receives the fourth response message returned by the source MME.

S908. The MEC determines an address of the target MME according to the identifier of the target MME, and sends a first request message to the address of the target MME.

The first request message carries the identifier of the UE and the EPS bearer ID of the UE that are carried in the fourth response message, and the first request message is used to request information about the second bearer of the UE.

S931. The target MME receives the first request message sent by the MEC.

S932. The target MME determines information about the second bearer according to the identifier of the UE and the EPS bearer ID of the UE that are carried in the first request message.

It should be understood that, the target MME stores the information about the second bearer, and may store the information about the second bearer corresponding to the identifier of the UE and the EPS bearer ID of the UE.

For specific content of the information about the second bearer, refer to the related description of the embodiment shown in FIG. 4. Details are not described herein.

S933. The target MME adds the information about the second bearer to first response message, and sends the first response message to the MEC.

S909. The MEC receives the first response message sent by the target MME.

S910. The MEC stores the information about the second bearer according to the identifier of the UE and the EPS bearer ID of the UE.

In conclusion, in this embodiment of the present invention, the mobile edge computing obtains the data packet that carries the end marker, to determine that the UE is in a handover procedure, determines the identifier of the source serving gateway, requests the identifier of the source MME from the source serving gateway, and requests the identifier of the UE, a bearer identifier of the UE, and the identifier of the corresponding target MME from the source MME. Further, the information about the second bearer is requested from the target MME, and the information about the second bearer is stored.

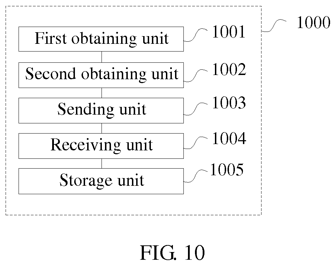

FIG. 10 is a schematic structural diagram of an apparatus for determining a bearer for a mobile edge computing according to another embodiment of the present invention. The apparatus is mainly configured to implement the foregoing methods for determining a bearer. As shown in FIG. 10, the apparatus may include an apparatus 1000. The apparatus 1000 may specifically include: a first obtaining unit 1001, a second obtaining unit 1002, a sending unit 1003, a receiving unit 1004, and a storage unit 1005.

The first obtaining unit 1001 is configured to obtain a data packet that carries an end marker, where the end marker is used to indicate that UE is in a handover procedure. The second obtaining unit 1002 is configured to obtain a bearer identifier of the UE and an identifier of the UE according to the data packet that carries the end marker. The sending unit 1003 is configured to send a first request message to a node of a second bearer, where the request message carries the bearer identifier of the UE and the identifier of the UE, and the request message is used to request information about the second bearer. The receiving unit 1004 is configured to receive a first response message sent by the node of the second bearer, where the response message carries the information about the second bearer. The storage unit 1005 is configured to store the information about the second bearer according to the identifier of the UE and the bearer identifier of the UE.

The data packet that carries the end marker further carries a tunnel endpoint identifier TEID of a first bearer.

Optionally, the second obtaining unit is specifically configured to determine the identifier of the UE and the bearer identifier of the UE according to the TEID of the first bearer, where the identifier of the UE is an IP address of the UE, and the bearer identifier of the UE is the tunnel endpoint identifier TEID of the first bearer.

Optionally, the node of the second bearer is a CNIS.

Further, in another implementation of this embodiment of the present invention, the second obtaining unit 1002 may include: a first determining subunit, a first sending subunit, and a first receiving subunit.

The first determining subunit is configured to determine an identifier of a node of a first bearer according to the data packet that carries the end marker.

The first sending subunit is configured to send a second request message that carries the TEID of the first bearer to the node of the first bearer according to the identifier of the node of the first bearer, where the second request message is used to request the identifier of the UE and the bearer identifier of the UE.

The first receiving subunit is configured to receive a second response message sent by the node of the first bearer, where the second response message carries the identifier of the UE and the bearer identifier of the UE.

Optionally, the node of the first bearer is a first access network device, and the node of the second bearer is the second access network device.

Optionally, the identifier of the UE is a CRNIT or an S-TMSI.

Further, when the identifier of the UE is a CRNIT, the first request message further carries an identifier of the first access network device.

Optionally, the node of the first bearer is a first serving gateway.

When the handover is a handover between different systems, the first serving gateway is a source SGSN of the UE, and the node of the second bearer is a target MME or a target SGSN of the UE; or when the handover is a handover within a same system, the first serving gateway and the node of the second bearer are both an SGSN that serves the UE.

Optionally, the identifier of the UE is an IMSI, an IP address and an APN of the UE, or an MSISDN.

Further, in still another implementation of this embodiment of the present invention, the second obtaining unit 1002 may further include: a second determining subunit, a second sending subunit, a second receiving subunit, a third sending subunit, and a third receiving subunit.

The second determining subunit is configured to determine an identifier of a first serving gateway according to the data packet that carries the end marker.

The second sending subunit is configured to send a third request message that carries the TEID of the first bearer to the first serving gateway according to the identifier of the first serving gateway, where the third request message is used to request an identifier of a node of the first bearer.

The second receiving unit is configured to receive a third response message sent by the first serving gateway, where the third response message carries the identifier of the node of the first bearer.

The third sending subunit is configured to send, according to the identifier of the node of the first bearer, a fourth response message that carries the TEID of the first bearer, where the fourth response message is used to request the identifier of the UE and the bearer identifier of the UE.

The third receiving subunit is configured to receive a fourth response message sent by the node of the first bearer, where the fourth response message carries the identifier of the UE and the bearer identifier of the UE.

The identifier of the UE is an IMSI, an IP address and an APN of the UE, or an MSISDN.

Optionally, the first serving gateway is an SGW; and
when the handover is a handover between different systems, the node of the first bearer is a source MME of the UE, the node of the second bearer is a target MME or a target SGSN of the UE; or
when the handover is a handover within a same system, the node of the first bearer and the node of the second bearer are both an MME that serves the UE.

Optionally, the bearer identifier of the UE is an EPS bearer identifier, or an ERAB bearer identifier, or an S1 bearer identifier.

Optionally, before the MEC sends the first request message to the node of the second bearer, the apparatus further includes a third obtaining unit, configured to obtain an identifier of the node of the second bearer.

Optionally, the first serving gateway and a second serving gateway are a same serving gateway.

The apparatus shown in FIG. 10 is configured to implement the methods shown in FIG. 4, FIG. 6, FIG. 7, FIG. 8, and FIG. 9, and cross reference may be made for understanding. For brevity, details are not described herein one by one.

In conclusion, in this embodiment of the present invention, the MEC obtains the data packet that carries the end marker, to determine that a handover to an access network device of the UE occurs, and obtains, from a bearer node after the handover, the information about the corresponding second bearer according to a bearer TEID carried in the data packet that carries the end marker. Alternatively, the MEC requests the identifier of the UE and the identifier of the node of second bearer corresponding to the UE from the node of the first bearer,, and requests related information of the UE from the node of the second bearer by using the identifier of the UE, to determine the information about the second bearer. Therefore, the second bearer can be used to transmit data when data transmission is to be performed by using the first bearer.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention as set forth in the appended claims.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementations, the objective, technical solutions, and benefits of the present invention are further described in detail. It should be understood that the foregoing descriptions are merely specific implementations of the present invention, but are not intended to limit the protection scope of the present invention as set forth in the appended claims. Any modification, equivalent replacement, or improvement made without departing from and principle of the present invention should fall within the protection scope of the present invention as set forth in the appended claims.

## Claims

1. A method for determining a bearer for a mobile edge computing device, MEC, wherein the method is applied to a handover procedure of user equipment, UE, from a first access network device to a second access network device, data of the UE is handed over from a first bearer between the first access network device and a first serving gateway to a second bearer between the second access network device and a second serving gateway, and the method comprises:
obtaining (S401), by the MEC, a data packet that carries an end marker and a tunnel endpoint identifier, TEID, of the first bearer, wherein the end marker is used to indicate that the UE is in a handover procedure;
obtaining (S402), by the MEC, a bearer identifier of the UE by determining the TEID of the first bearer and an identifier of the UE according to the data packet that carries the end marker by determining an IP address according to the TEID of the first bearer;
sending (S403), by the MEC, a first request message to a node of the second bearer, wherein the first request message carries the bearer identifier of the UE and the identifier of the UE, and the first request message is used to request information about the second bearer;
receiving (S404), by the MEC, a first response message from the node of the second bearer, wherein the first response message carries the information about the second bearer; and
storing (S405), by the MEC, the information about the second bearer according to the identifier of the UE and the bearer identifier of the UE
wherein the obtaining, by the MEC, a bearer identifier of the UE and an identifier of the UE according to the data packet that carries the end marker comprises:
receiving, by the MEC, a further response message from the node of the first bearer, wherein the further response message carries the identifier of the UE and the bearer identifier of the UE,
wherein, (a), the node of the first bearer is the first access network device, and the node of the second bearer is the second access network device, or,
(b) the node of the first bearer is a first SGSN of the UE, and the node of the second bearer is the first SGSN, a second MME or a second SGSN of the UE.

2. The method according to claim 1, wherein the node of the second bearer is a core network information service, CNIS.

3. The method according to claim 1, wherein the obtaining, by the MEC, a bearer identifier of the UE and an identifier of the UE according to the data packet that carries the end marker comprises:
determining, by the MEC, an identifier of a node of the first bearer according to the data packet that carries the end marker; and
sending, by the MEC, a second request message that carries the TEID of the first bearer to the node of the first bearer according to the identifier of the node of the first bearer, wherein the second request message is used to request the identifier of the UE and the bearer identifier of the UE.

4. The method according to claim 1, wherein the obtaining, by the MEC, a bearer identifier of the UE and an identifier of the UE according to the data packet that carries the end marker comprises:
determining, by the MEC, an identifier of the first serving gateway according to the data packet that carries the end marker;
sending, by the MEC, a third request message that carries the TEID of the first bearer to the first serving gateway according to the identifier of the first serving gateway, wherein the third request message is used to request an identifier of a node of the first bearer;
receiving, by the MEC, a third response message from the first serving gateway, wherein the third response message carries the identifier of the node of the first bearer;
sending, by the MEC according to the identifier of the node of the first bearer, a fourth request message that carries the TEID of the first bearer, wherein the fourth request message is used to request the identifier of the UE and the bearer identifier of the UE; wherein
the identifier of the UE is an IMSI, an IP address and an APN of the UE, or an MSISDN.

5. The method according to claim 1, wherein the first serving gateway is an SGW; and
when the handover is a handover between different systems, the node of the first bearer is a source mobility management entity, MME, of the UE, the node of the second bearer is a target MME or a target serving GPRS support node, SGSN, of the UE; or
when the handover is a handover within a same system, the node of the first bearer and the node of the second bearer are both an MME that serves the UE.

6. The method according to any one of claims 1 to 5, wherein the bearer identifier of the UE is an EPS bearer identifier, or an ERAB bearer identifier, or an S 1 bearer identifier.

7. The method according to any one of claims 1 to 6, wherein the first serving gateway and the second serving gateway are a same serving gateway.

8. An apparatus for determining a bearer for a mobile edge computing device, MEC, wherein the apparatus is applied to a handover procedure of user equipment, UE, from a first access network device to a second access network device, data of the UE is handed over from a first bearer between the first access network device and a first serving gateway to a second bearer between the second access network device and a second serving gateway, and the apparatus comprises: a first obtaining unit (1001), a second obtaining unit (1002), a sending unit (1003), a receiving unit (1004), and a storage unit (1005), wherein
the first obtaining unit (1001) is configured to obtain a data packet that carries an end marker and a tunnel endpoint identifier, TEID, of the first bearer, wherein the end marker is used to indicate that the UE is in a handover procedure;
the second obtaining unit (1002) is configured to obtain a bearer identifier of the UE by determining the TEID and an identifier of the UE according to the data packet that carries the end marker by determining an IP address according to the TEID of the first bearer;
the sending unit (1003) is configured to send a first request message to a node of the second bearer, wherein the first request message carries the bearer identifier of the UE and the identifier of the UE, and the first request message is used to request information about the second bearer;
the receiving unit (1004) is configured to receive a first response message from the node of the second bearer, wherein the first response message carries the information about the second bearer; and
the storage unit (1005) is configured to store the information about the second bearer according to the identifier of the UE and the bearer identifier of the UE
wherein the second obtaining unit (1002) comprises: a first receiving subunit, wherein
the first receiving subunit is configured to receive a further response message from the node of the first bearer, wherein the further response message carries the identifier of the UE and the bearer identifier of the UE,
wherein, (a), the node of the first bearer is the first access network device, and the node of the second bearer is the second access network device, or,
(b) the node of the first bearer is a first SGSN of the UE, and the node of the second bearer is the first SGSN, a second MME or a second SGSN of the UE.

9. The apparatus according to claim 8, wherein the node of the second bearer is a core network information service, CNIS.

10. The apparatus according to claim 8, wherein the second obtaining unit (1002) further comprises: a first determining subunit, and a first sending subunit, wherein
the first determining subunit is configured to determine an identifier of the node of the first bearer according to the data packet that carries the end marker; and
the first sending subunit is configured to send a second request message that carries the TEID of the first bearer to the node of the first bearer according to the identifier of the node of the first bearer, wherein the second request message is used to request the identifier of the UE and the bearer identifier of the UE.

## Patentansprüche

1. Verfahren zum Bestimmen eines Trägers für eine Mobile-Edge-Computing-Vorrichtung (MEC), wobei das Verfahren an einer Übergabeprozedur eines Benutzergeräts (UE) von einer ersten Netzwerkzugangsvorrichtung an eine zweite Netzwerkzugangsvorrichtung angewandt wird, wobei Daten des UE von einem ersten Träger zwischen der ersten Netzwerkzugangsvorrichtung und einem ersten bedienenden Gateway an einen zweiten Träger zwischen der zweiten Netzwerkzugangsvorrichtung und einem zweiten bedienenden Gateway übergeben werden, und wobei das Verfahren Folgendes umfasst:
Erhalten (S401), durch die MEC, eines Datenpakets, das eine Endmarkierung und eine Tunnelendpunktkennung (TEID) des ersten Trägers trägt, wobei die Endmarkierung verwendet wird, um anzugeben, dass sich das UE in einer Übergabeprozedur befindet;
Erhalten (S402), durch die MEC, einer Trägerkennung des UE durch Bestimmen der TEID des ersten Trägers und einer Kennung des UE gemäß dem Datenpaket, das die Endmarkierung trägt, durch Bestimmen einer IP-Adresse gemäß der TEID des ersten Trägers;
Senden (S403), durch die MEC, einer ersten Anforderungsnachricht an einen Knoten des zweiten Trägers,
wobei die erste Anforderungsnachricht die Trägerkennung des UE und die Kennung des UE trägt und die erste Anforderungsnachricht verwendet wird, um Informationen über den zweiten Träger anzufordern;
Empfangen (S404), durch die MEC, einer ersten Antwortnachricht von dem Knoten des zweiten Trägers, wobei die erste Antwortnachricht die Informationen über den zweiten Träger trägt; und
Speichern (S405), durch die MEC, der Informationen über den zweiten Träger gemäß der Kennung des UE und der Trägerkennung des UE,
wobei das Erhalten, durch die MEC, einer Trägerkennung des UE und einer Kennung des UE gemäß dem Datenpaket, das die Endmarkierung trägt, Folgendes umfasst:
Empfangen, durch die MEC, einer weiteren Antwortnachricht von dem Knoten des ersten Trägers, wobei
die weitere Antwortnachricht die Kennung des UE und die Trägerkennung des UE trägt,
wobei (a) der Knoten des ersten Trägers die erste Netzwerkzugangsvorrichtung ist und der Knoten des zweiten Trägers die zweite Netzwerkzugangsvorrichtung ist oder
(b) der Knoten des ersten Trägers ein erster SGSN des UE ist und der Knoten des zweiten Trägers der erste SGSN, eine zweite MME oder ein zweiter SGSN des UE ist.

2. Verfahren nach Anspruch 1, wobei der Knoten des zweiten Trägers ein Kernnetzwerk-Informationsdienst (CNIS) ist.

3. Verfahren nach Anspruch 1, wobei das Erhalten, durch die MEC, einer Trägerkennung des UE und einer Kennung des UE gemäß dem Datenpaket, das die Endmarkierung trägt, Folgendes umfasst:
Bestimmen, durch die MEC, einer Kennung eines Knotens des ersten Trägers gemäß dem Datenpaket, das die Endmarkierung trägt; und
Senden, durch die MEC, einer zweiten Anforderungsnachricht, die die TEID des ersten Trägers an den Knoten des ersten Trägers gemäß der Kennung des Knotens des ersten Trägers trägt, wobei die zweite Anforderungsnachricht verwendet wird, um die Kennung des UE und die Trägerkennung des UE anzufordern.

4. Verfahren nach Anspruch 1, wobei das Erhalten, durch die MEC, einer Trägerkennung des UE und einer Kennung des UE gemäß dem Datenpaket, das die Endmarkierung trägt, Folgendes umfasst:
Bestimmen, durch die MEC, einer Kennung des ersten bedienenden Gateways gemäß dem Datenpaket, das die Endmarkierung trägt;
Senden, durch die MEC, einer dritten Anforderungsnachricht, die die TEID des ersten Trägers an das erste bedienende Gateway gemäß der Kennung des ersten bedienenden Gateways trägt, wobei die dritte Anforderungsnachricht verwendet wird, um eine Kennung eines Knotens des ersten Trägers anzufordern;
Empfangen, durch die MEC, einer dritten Antwortnachricht von dem ersten bedienenden Gateway, wobei die dritte Antwortnachricht die Kennung des Knotens des ersten Trägers trägt;
Senden, durch die MEC, einer vierten Anforderungsnachricht gemäß der Kennung des Knotens des ersten Trägers, die die TEID des ersten Trägers trägt, wobei die vierte Anforderungsnachricht verwendet wird, um die Kennung des UE und die Trägerkennung des UE anzufordern; wobei die Kennung des UE eine IMSI, eine IP-Adresse und ein APN des UE oder eine MSISDN ist.

5. Verfahren nach Anspruch 1, wobei das erste bedienende Gateway ein SGW ist; und
wenn die Übergabe eine Übergabe zwischen unterschiedlichen Systemen ist, der Knoten des ersten Trägers eine Quellen-Mobilitätsverwaltungsinstanz (Quellen-MME) des UE ist und der Knoten des zweiten Trägers eine Ziel-MME oder ein bedienender Ziel-GPRS-Unterstützungsknoten (SGSN) des UE ist; oder
wenn die Übergabe eine Übergabe innerhalb eines gleichen Systems ist, der Knoten des ersten Trägers und der Knoten des zweiten Trägers jeweils eine MME sind, die das UE bedienen.

6. Verfahren nach einem der Ansprüche 1 bis 5, wobei die Trägerkennung des UE eine EPS-Trägerkennung oder eine ERAB-Trägerkennung oder eine S1-Trägerkennung ist.

7. Verfahren nach einem der Ansprüche 1 bis 6, wobei das erste bedienende Gateway und das zweite bedienende Gateway das gleiche bedienende Gateway sind.

8. Einrichtung zum Bestimmen eines Trägers für eine Mobile-Edge-Computing-Vorrichtung (MEC), wobei die Einrichtung an einer Übergabeprozedur eines Benutzergeräts (UE) von einer ersten Netzwerkzugangsvorrichtung an eine zweite Netzwerkzugangsvorrichtung angewandt wird, wobei Daten des UE von einem ersten Träger zwischen der ersten Netzwerkzugangsvorrichtung und einem ersten bedienenden Gateway an einen zweiten Träger zwischen der zweiten Netzwerkzugangsvorrichtung und einem zweiten bedienenden Gateway übergeben werden, und wobei die Einrichtung Folgendes umfasst: eine erste Erhaltungseinheit (1001), eine zweite Erhaltungseinheit (1002), eine Sendeeinheit (1003), eine Empfangseinheit (1004) und eine Speichereinheit (1005), wobei die erste Erhaltungseinheit (1001) dazu konfiguriert ist, ein Datenpaket zu erhalten, das eine Endmarkierung und eine Tunnelendpunktkennung (TEID) des ersten Trägers trägt, wobei die Endmarkierung verwendet wird, um anzugeben, dass sich das UE in einer Übergabeprozedur befindet;
die zweite Erhaltungseinheit (1002) dazu konfiguriert ist, eine Trägerkennung des UE durch Bestimmen der TEID und eine Kennung des UE gemäß dem Datenpaket, das die Endmarkierung trägt, durch Bestimmen einer IP-Adresse gemäß der TEID des ersten Trägers zu erhalten;
die Sendeeinheit (1003) dazu konfiguriert ist, eine erste Anforderungsnachricht an einen Knoten des zweiten Trägers zu senden, wobei die erste Anforderungsnachricht die Trägerkennung des UE und die Kennung des UE trägt, und wobei die erste Anforderungsnachricht verwendet wird, um Informationen über den zweiten Träger anzufordern;
die Empfangseinheit (1004) dazu konfiguriert ist, eine erste Antwortnachricht von dem Knoten des zweiten Trägers zu empfangen, wobei die erste Antwortnachricht die Informationen über den zweiten Träger trägt; und
die Speichereinheit (1005) dazu konfiguriert ist, die Informationen über den zweiten Träger gemäß der Kennung des UE und der Trägerkennung des UE zu speichern,
wobei die zweite Erhaltungseinheit (1002) eine erste Empfangsuntereinheit umfasst, wobei
die erste Empfangsuntereinheit dazu konfiguriert ist, eine weitere Antwortnachricht von dem Knoten des ersten Trägers zu empfangen, wobei die weitere Antwortnachricht die Kennung des UE und die Trägerkennung des UE trägt,
wobei (a) der Knoten des ersten Trägers die erste Netzwerkzugangsvorrichtung ist und der Knoten des zweiten Trägers die zweite Netzwerkzugangsvorrichtung ist oder
(b) der Knoten des ersten Trägers ein erster SGSN des UE ist und der Knoten des zweiten Trägers der erste SGSN, eine zweite MME oder ein zweiter SGSN des UE ist.

9. Einrichtung nach Anspruch 8, wobei der Knoten des zweiten Trägers ein Kernnetzwerk-Informationsdienst (CNIS) ist.

10. Einrichtung nach Anspruch 8, wobei die zweite Erhaltungseinheit (1002) ferner Folgendes umfasst: eine erste Bestimmungsuntereinheit und eine erste Sendeuntereinheit, wobei
die erste Bestimmungsuntereinheit dazu konfiguriert ist, eine Kennung des Knotens des ersten Trägers gemäß dem Datenpaket, das die Endmarkierung trägt, zu bestimmen; und
die erste Sendeuntereinheit dazu konfiguriert ist, eine zweite Anforderungsnachricht, die die TEID des ersten Trägers trägt, an den Knoten des ersten Trägers gemäß der Kennung des Knotens des ersten Trägers zu senden, wobei die zweite Anforderungsnachricht verwendet wird, um die Kennung des UE und die Trägerkennung des UE anzufordern.

## Revendications

1. Procédé permettant de déterminer une porteuse pour un dispositif informatique en périphérie mobile (MEC), dans lequel le procédé est appliqué à une procédure de transfert intercellulaire d'un équipement d'utilisateur (UE), d'un premier dispositif de réseau d'accès à un second dispositif de réseau d'accès, des données de l'UE sont transférées d'une première porteuse entre le premier dispositif de réseau d'accès et une première passerelle de desserte à une seconde porteuse entre le second dispositif de réseau d'accès et une seconde passerelle de desserte, et le procédé comprend :
l'obtention (S401), par le MEC, d'un paquet de données qui porte un marqueur d'extrémité et un identifiant de point terminal de tunnel (TEID) de la première porteuse, dans lequel le marqueur d'extrémité est utilisé pour indiquer que l'UE est dans une procédure de transfert intercellulaire ;
l'obtention (S402), par le MEC, d'un identifiant de porteuse de l'UE par détermination du TEID de la première porteuse et d'un identifiant de l'UE en fonction du paquet de données qui porte le marqueur d'extrémité par détermination d'une adresse IP en fonction du TEID de la première porteuse ;
l'envoi (S403), par le MEC, d'un premier message de demande à un nœud de la seconde porteuse, dans lequel le premier message de demande porte l'identifiant de porteuse de l'UE et l'identifiant de l'UE, et le premier message de demande est utilisé pour demander des informations sur la seconde porteuse ;
la réception (S404), par le MEC, d'un premier message de réponse de la part du nœud de la seconde porteuse, dans lequel le premier message de réponse porte les informations sur la seconde porteuse ; et
la mémorisation (S405), par le MEC, des informations sur la seconde porteuse en fonction de l'identifiant de l'UE et de l'identifiant de porteuse de l'UE
dans lequel l'obtention, par le MEC, d'un identifiant de porteuse de l'UE et d'un identifiant de l'UE en fonction du paquet de données qui porte le marqueur d'extrémité comprend :
la réception, par le MEC, d'un autre message de réponse de la part du nœud de la première porteuse, dans lequel
l'autre message de réponse porte l'identifiant de l'UE et l'identifiant de porteuse de l'UE,
dans lequel, a) le nœud de la première porteuse est le premier dispositif de réseau d'accès et le nœud de la seconde porteuse est le second dispositif de réseau d'accès, ou
b) le nœud de la première porteuse est un premier SGSN de l'UE et le nœud de la seconde porteuse est le premier SGSN, une seconde MME ou un second SGSN de l'UE.

2. Procédé selon la revendication 1, dans lequel le nœud de la seconde porteuse est un service d'information de réseau central (CNIS).
cum.

3. Procédé selon la revendication 1, dans lequel l'obtention, par le MEC, d'un identifiant de porteuse de l'UE et d'un identifiant de l'UE en fonction du paquet de données qui porte le marqueur d'extrémité comprend :
la détermination, par le MEC, d'un identifiant d'un nœud de la première porteuse en fonction du paquet de données qui porte le marqueur d'extrémité ; et
l'envoi, par le MEC, d'un deuxième message de demande qui porte le TEID de la première porteuse au nœud de la première porteuse en fonction de l'identifiant du nœud de la première porteuse, dans lequel le deuxième message de demande est utilisé pour demander l'identifiant de l'UE et l'identifiant de porteuse de l'UE.

4. Procédé selon la revendication 1, dans lequel l'obtention, par le MEC, d'un identifiant de porteuse de l'UE et d'un identifiant de l'UE en fonction du paquet de données qui porte le marqueur d'extrémité comprend :
la détermination, par le MEC, d'un identifiant de la première passerelle de desserte en fonction du paquet de données qui porte le marqueur d'extrémité ;
l'envoi, par le MEC, d'un troisième message de demande qui porte le TEID de la première porteuse à la première passerelle de desserte en fonction de l'identifiant de la première passerelle de desserte, dans lequel le troisième message de demande est utilisé pour demander un identifiant d'un nœud de la première porteuse ;
la réception, par le MEC, d'un troisième message de réponse de la part de la première passerelle de desserte, dans lequel le troisième message de réponse porte l'identifiant du nœud de la première porteuse ;
l'envoi, par le MEC en fonction de l'identifiant du nœud de la première porteuse, d'un quatrième message de demande qui porte le TEID de la première porteuse, dans lequel le quatrième message de demande est utilisé pour demander l'identifiant de l'UE et l'identifiant de porteuse de l'UE ; dans lequel l'identifiant de l'UE est un IMSI, une adresse IP et un APN de l'UE, ou un MSISDN.

5. Procédé selon la revendication 1, dans lequel la première passerelle de desserte est une SGW ; et
lorsque le transfert intercellulaire est un transfert intercellulaire entre différents systèmes, le nœud de la première porteuse est une entité source de gestion de mobilité (MME) de l'UE, le nœud de la seconde porteuse est une MME cible ou un nœud de support de GPRS de desserte (SGSN) cible de l'UE ; ou
lorsque le transfert intercellulaire est un transfert intercellulaire au sein d'un même système, le nœud de la première porteuse et le nœud de la seconde porteuse sont l'un et l'autre une MME qui dessert l'UE.

6. Procédé selon l'une quelconque des revendications 1 à 5, dans lequel l'identifiant de porteuse de l'UE est un identifiant de porteuse EPS ou un identifiant de porteuse ERAB ou un identifiant de porteuse S1.

7. Procédé selon l'une quelconque des revendications 1 à 6, dans lequel la première passerelle de desserte et la seconde passerelle de desserte sont une même passerelle de desserte.

8. Appareil permettant de déterminer une porteuse pour un dispositif informatique en périphérie mobile (MEC), dans lequel l'appareil est appliqué à une procédure de transfert intercellulaire d'un équipement d'utilisateur (UE) d'un premier dispositif de réseau d'accès à un second dispositif de réseau d'accès, des données de l'UE sont transférées d'une première porteuse entre le premier dispositif de réseau d'accès et une première passerelle de desserte à une seconde porteuse entre le second dispositif de réseau d'accès et une seconde passerelle de desserte, et l'appareil comprend : une première unité d'obtention (1001), une seconde unité d'obtention (1002), une unité d'envoi (1003), une unité de réception (1004) et une unité de mémorisation (1005), dans lequel
la première unité d'obtention (1001) est configurée pour obtenir un paquet de données qui porte un marqueur d'extrémité et un identifiant de point terminal de tunnel (TEID) de la première porteuse, dans lequel le marqueur d'extrémité est utilisé pour indiquer que l'UE est dans une procédure de transfert intercellulaire ;
la seconde unité d'obtention (1002) est configurée pour obtenir un identifiant de porteuse de l'UE en déterminant le TEID et un identifiant de l'UE en fonction du paquet de données qui porte le marqueur d'extrémité en déterminant une adresse IP en fonction du TEID de la première porteuse ; l'unité d'envoi (1003) est configurée pour envoyer un premier message de demande à un nœud de la seconde porteuse, dans lequel le premier message de demande porte l'identifiant de porteuse de l'UE et l'identifiant de l'UE, et le premier message de demande est utilisé pour demander des informations sur la seconde porteuse ;
l'unité de réception (1004) est configurée pour recevoir un premier message de réponse de la part du nœud de la seconde porteuse, dans lequel le premier message de réponse porte les informations sur la seconde porteuse ; et
l'unité de mémorisation (1005) est configurée pour mémoriser les informations sur la seconde porteuse en fonction de l'identifiant de l'UE et de l'identifiant de porteuse de l'UE dans lequel la seconde unité d'obtention (1002) comprend : une première sous-unité de réception, dans lequel
la première sous-unité de réception est configurée pour recevoir un autre message de réponse de la part du nœud de la première porteuse, dans lequel l'autre message de réponse porte l'identifiant de l'UE et l'identifiant de porteuse de l'UE,
dans lequel, a) le nœud de la première porteuse est le premier dispositif de réseau d'accès et le nœud de la seconde porteuse est le second dispositif de réseau d'accès, ou
b) le nœud de la première porteuse est un premier SGSN de l'UE et le nœud de la seconde porteuse est le premier SGSN, une seconde MME ou un second SGSN de l'UE.

9. Appareil selon la revendication 8, dans lequel le nœud de la seconde porteuse est un service d'information de réseau central (CNIS).

10. Appareil selon la revendication 8, dans lequel la seconde unité d'obtention (1002) comprend en outre : une première sous-unité de détermination et une première sous-unité d'envoi, dans lequel
la première sous-unité de détermination est configurée pour déterminer un identifiant du nœud de la première porteuse en fonction du paquet de données qui porte le marqueur d'extrémité ; et
la première sous-unité d'envoi est configurée pour envoyer un deuxième message de demande qui porte le TEID de la première porteuse au nœud de la première porteuse en fonction de l'identifiant du nœud de la première porteuse, dans lequel le deuxième message de demande est utilisé pour demander l'identifiant de l'UE et l'identifiant de porteuse de l'UE.
